# EUROPEAN PATENT APPLICATION

(11) **EP 3 222 384 A1**
(43) Date of publication of application: **27.09.2017**
(21) Application number: 16162427.5
(22) Date of filing: 24.03.2016
(51) Int. Cl.: B23P 11/00, F16D 1/06, F16D 1/072

(54) **OPERATION MECHANISM FOR AN ELECTRICAL BREAKER COMPRISING A CRANKSHAFT INCLUDING A BROACHING SPLINED SHAFT AND A HUB ASSEMBLED TOGETHER IN FORCE**

(71) Applicant: General Electric Technology GmbH, 5400 Baden (CH)
(72) Inventor: VON ALLMEN, Peter, 5054 Kirchleerau (CH); HAUPT, Matthias, 5036 Oberentfelden (CH)
(74) Representative: Brevalex

(57) **Abstract**

The invention relates to a process for assembling rigidly an end (13) of a shaft (2) to a hub (3), comprising the steps of:
- forming splines at the end of the shaft, these splines having sharp cutting edges at their extremities forming teeth for broaching the material of the hub (3) ;
- machining in the hub (3) a bore (8) having a smooth inner face, this smooth inner face being cylindrical and having a diameter slightly inferior to the outer diameter of the splined end of the shaft (2) ;
- inserting by force the end of the shaft (2) in the bore (8), to broach splines at the inner face of the bore (8) by means of the teeth of the splines of the shaft (2).

## Description

### TECHNICAL FILED

The invention relates to the assembly of parts of an operation mechanism used to actuate an electric high or medium voltage circuit breaker.

### STATE OF PRIOR ART

An operation mechanism for an electric circuit breaker comprises a rotating output element which is mechanically connected to an actuating member or lever of the circuit breaker. It comprises an actuating spring which is released to move the output element at high speed in order to open the contacts of the electric circuit breaker accurately at a given time.

Thanks to this operation mechanism, the electric contacts of the breaker can be opened at an appropriate time corresponding to the moment when the instant value of the alternating electric current is null, to diminish the chances of an electric arc appearing between the electric contacts of the breaker.

This mechanism comprises several moving parts including cams and levers assembled to form a crankshaft actuated by the spring and cooperating with the output element to rotate it along a predetermined rotational path upon opening instruction. When the circuit breaker is to be opened, the spring is released to rotate the cams and levers which in turn rotate the output element.

Since operation is conducted in a very short time interval, the mechanical components of this mechanism are moved at high speed, requiring that the components of this mechanism have a significant mechanical robustness.

The moving parts of this mechanism comprise shafts assembled together with hubs and levers and cams to form crankshafts. This construction results in high level of mechanical stress at the junction of each shaft with a corresponding lever or hub when high torque is to be transmitted, i.e. during operation and when the spring is being loaded.

Usually, splined shaft connection are used : the splined extremity of the shaft is for example pressed in a corresponding splined bore of the hub having accurately the appropriate diameter to ensure that the connection be free of play.

The problem is that manufacturing of splined shaft connections is expensive, especially the broaching of the splined bore. Moreover, the tolerances in the geometrical dimensions of the shaft and of the bore must be very tight, rendering manufacturing even more expensive. Nevertheless, even if tolerances are very tight, the quality of the press fit can vary from one piece to the next.

Furthermore, since the relative angular position of shaft and of the hub is important, the splines of each part must be aligned with very high accuracy, resulting in raising the production costs even higher.

### PRESENTATION OF THE INVENTION

To this end, the invention is a process for assembling rigidly an end of a shaft to a hub, comprising the steps of:
- forming splines at the end of the shaft, these splines having sharp cutting edges at their extremities forming teeth for broaching the material of the hub ;
- machining in the hub a bore having a smooth inner face, this smooth inner face being cylindrical and having a diameter inferior to the outer diameter of the splined end of the shaft;
- inserting by force the end of the shaft in the bore, to broach splines at the inner face of the bore by means of the teeth of the splines of the shaft.

With this solution, splines have to be provided only at the end of the shaft, i.e. not at the inner face of the bore, and geometrical tolerances for the dimensions of the shaft and of the bore can be increased, resulting in reduction of the production cost.

The invention also relates to such a process, comprising the step of forming an entering portion at the opening of the bore of the hub this entering portion having a diameter superior to the outer diameter of the splined end of shaft to center the end of shaft prior to its insertion by force in the bore.

The invention also relates to such a process, comprising the step of:
- forming at the end of the shaft a protruding centering portion having a diameter inferior to the outer diameter of the splined end;
- inserting the centering portion of the shaft in the bore prior to inserting by force the end of the shaft in this bore.

The invention also relates to such a process, comprising the step of forming a circular recess between the protruding centering portion and the end of the shaft to improve evacuation of metal chips resulting by the broaching process.

The invention also relates to such a process, wherein the end of the shaft comprises a circular recess to form a second tooth at each spline.

The invention also relates to a shaft to be used in such a process, comprising a splined end having teeth arranged broach a corresponding bore.

### BRIEF DESCRIPTION OF THE DRAWINGS

Figure 1 is a general view showing a shaft which has an end to be assembled to a first hub and a second end to be assembled to a second hub according to the invention;
Figure 2 is a general view showing a shaft assembled to a first hub and to a second hub according to the invention;
Figure 3 is a lateral view of a splined end of a shaft according to the invention;
Figure 4 is a section view of a splined end of a shaft according to the invention;
Figure 5 is a section view of a hub comprising a bore for the splined shaft according to the invention;
Figure 6 is a perspective view of the bore of the hub having partly the end of shaft inserted therein;
Figure 7 is a lateral view of another splined end of shaft according to the invention.

### DETAILED PRESENTATION OF PARTICULAR EMBODIMENTS

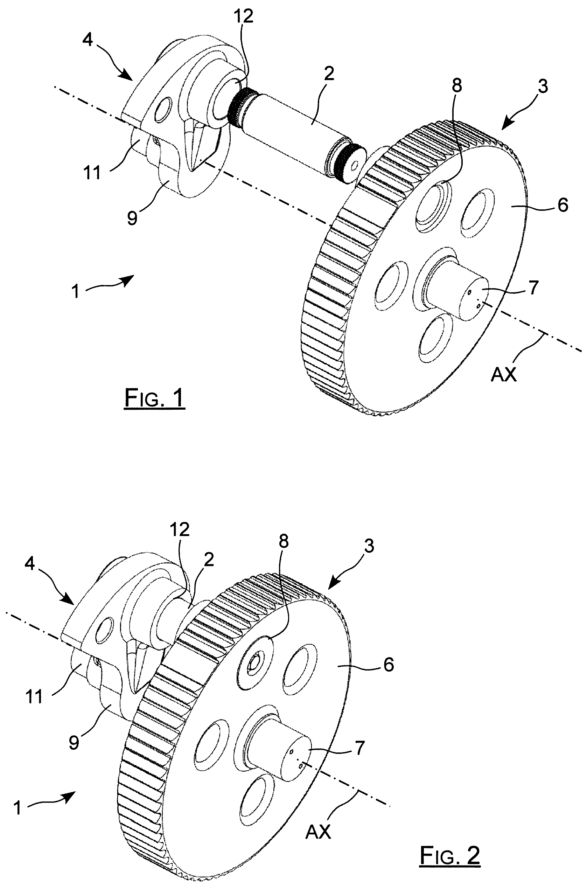

The crankshaft portion 1 seen on figure 1 and 2 comprises a shaft 2 which has a first end secured to a first hub 3 and a second end secured to a second hub 4. The first hub 3 comprises a cog-wheel 6 with a trunnion 7 at its center and a bore 8 into which is inserted and secured the first end of the shaft 2. The second hub 4 comprises a body 9 with another trunnion 11 and comprising another bore 12 into which is inserted and secured the second extremity of the shaft 2.

The crankshaft portion 1 rotates around an axis noted AX and which corresponds to the axis of trunnions 7 and 11, when it is in service, i.e. mounted into the operation mechanism of an electric breaker.

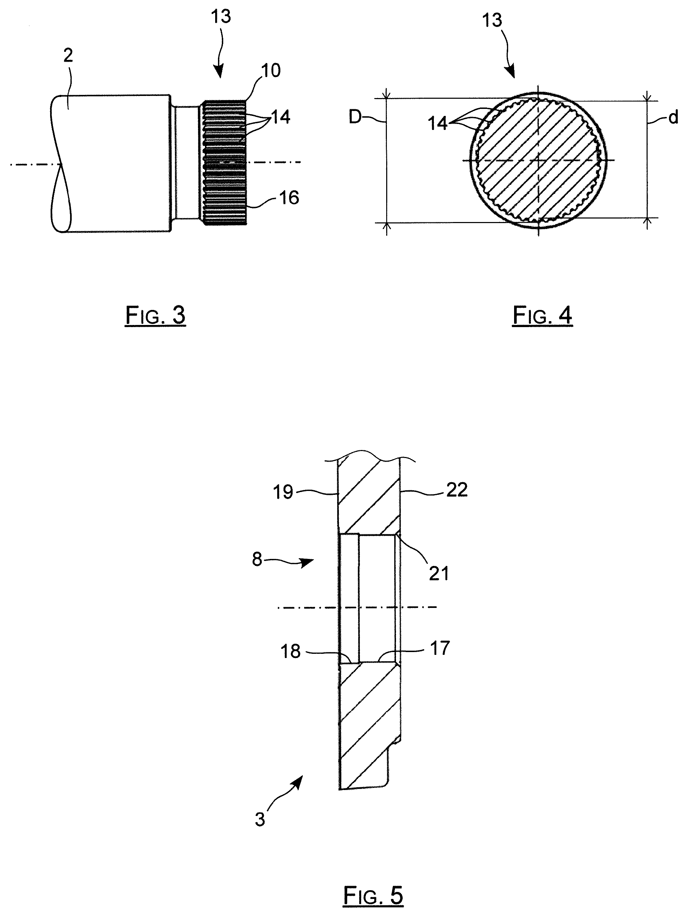

As seen in figure 3, the first end 13 of the shaft 2 comprises splines 14 at its periphery, these splines 14 being regularly spaced one from the others around the axis of revolution of the shaft, and oriented parallel to this axis. The extremity of each spline 14 is sharp and has the shape of a cutting edge to form a tooth able to broach the material of the hub at the inner face of its bore 8. One of these tooth is marked as 10 in figure 3.

In the example of figure 3, the extremity of each spline 14 is delimited by a plane flat face 16 of the end 13 of the shaft 2 extending perpendicular to its axis of rotation. As a result, each end of spline 14 has the shape of a sharp cutting edge delimited by two faces which are at least approximately perpendicular.

As seen in figure 4, the splined portion 13 has an outer diameter noted D, which corresponds to the tip circle diameter of portion 13 i.e. as measured at the heads of the splines 14. This splined portion 13 has also a base diameter, noted d, which is its diameter considered at the roots of its splines 14.

The bore 8 of the hub 3 comprises a main cylindrical portion 17 which inner diameter is slightly smaller than the outer diameter D of the splined section 13 of the end of the shaft.

This main cylindrical portion 17 is prolonged at one side by an entering portion 18 which corresponds to the opening of the bore 8 in one of the flat faces 19 of the hub 3, and at the other side by a splay portion 21 opening in the other flat face 22 of the hub.

The entering portion 18 has a diameter which is slightly larger than the outer diameter D of the end of shaft 13 to allow centering of the end of shaft 13 prior to its insertion by force in the bore.

Fixation of the shaft 2 to the hub 3 is obtained by placing the end 13 of this shaft 2 in the entering portion 18 to center it properly, in a direction perpendicular to the face 19. Pressure force is then applied at the opposite end of the shaft, by means of an hydraulic press or the like to insert the end 13 in the main portion 17.

When the splined end 13 is being inserted in the main portion 17, the tooth formed at the extremities of the splines 14 broach the inner face of the smooth and cylindrical main portion 17 of the bore and forms corresponding splines at the cylindrical face of this main portion 17. In other words, the teeth of the splines of the shaft 2 cut corresponding splines at the inner face of the bore during the pressing of the shaft 2.

The teeth 10 of the splined shaft 2 are harder than the inner face of the bore 8 to allow broaching of this bore. This can be obtained by local thermal treatment of the shaft end 13 or by choosing a material for the shaft 2 which is initially harder than the material of the hub 3.

Due to elastic deformation of the bore and of the shaft during pressing, it results in a press fit of the shaft end 13 into the bore which is independent from the geometrical tolerances but mainly influenced by the geometry of the cutting edges of the splined shaft and the elasticity of the parts.

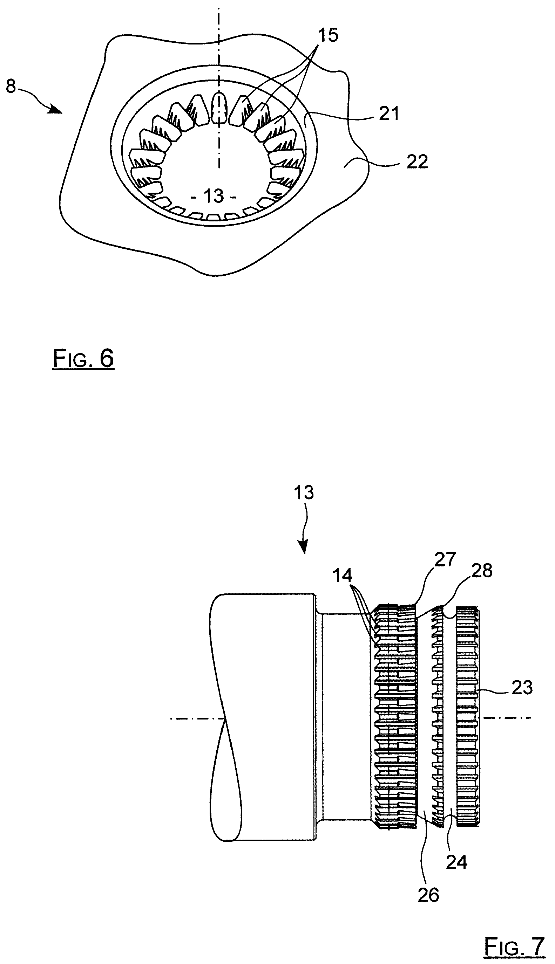

The metal shavings or chips 15 of this broaching operation are naturally extracted through the bore 8 at the face 22, as represented in figure 6.

In the resulting assembly, the shaft 2 is rigidly and firmly secured to the hub 3, and it cannot rotate relatively to the hub 2 thanks to its splined end 13 inserted into the bore 8 which is splined correspondingly.

The other hub 4 can be assembled to the opposite end of shaft 2 in the same manner since this other end of the shaft 2 is also splined with extremities forming tooth to broach the inner face of the bore 12 of this other hub 4.

It is to be pointed out that with the invention it is very simple to assemble the hub 3 to the hub 4 by means of the shaft 2 with a very high accuracy in the relative angular position of hub 3 relatively to hub 4. This is due to the fact that the angular position of the hub relatively to the shaft is completely free prior to force inserting the shaft in the corresponding bore.

In the embodiment of figure 7, the shaft 13 comprises a protrusion 23 extending over its end 13, and which has a diameter which is slightly smaller than the one of the splined end 13. This protrusion 23 allows to center the end of the shaft 13 in a cylindrical bore which does not comprise a larger entering portion, prior to force inserting the end of the shaft in the bore for broaching corresponding splines at the inner face of this bore.

As seen in figure 7, the protrusion 23 is separated from the end 13 by a circular recess 24 which can receive the metal shavings produced by the broaching of the bore by the splined end 13.

Moreover, the splined end 13 also comprises another circular recess 26 to form two successive cutting edges in the extremity of every spline 14. Two of these cutting edges formed in the same extremity of a spline 14 are referenced 27 and 28 in figure 7.

During press insertion of the shaft end of figure 7 in a corresponding bore, each spline is cut in the inner face of the bore by two teeth 27, 28, allowing to form in this bore splines which are deeper.

Thanks to the invention it is not necessary to broach the bore of the hub prior to assembling the shaft, accordingly an accurate broaching operation is not necessary anymore, which lowers the production cost.

The geometrical accuracy of the machining of the shaft and of the bore do not affect the quality of the press fit and of the geometrical conformity of the assembly.

Since the splines are cut in the bore during assembly, the angular position of the splines on the shaft is not important: it is only necessary to ensure in the assembly process that the alignment of the shaft with the bore is appropriate.

## Claims

1. Process for assembling rigidly an end (13) of a shaft (2) to a hub (3), comprising the steps of:
- forming splines (14) at the end of the shaft, these splines having sharp cutting edges at their extremities forming teeth (10 ; 27, 28) for broaching the material of the hub (3) ;
- machining in the hub (3) a bore (8) having a smooth inner face (17), this smooth inner face (17) being cylindrical and having a diameter inferior to the outer diameter (D) of the splined end (13) of the shaft (2);
- inserting by force the end (13) of the shaft (2) in the bore (8), to broach splines at the inner face (17) of the bore (8) by means of the teeth (10) of the splines (14) of the shaft (2).

2. Process according to claim 1, comprising the step of forming an entering portion (18) at the opening of the bore (8) of the hub (3) this entering portion having a diameter superior to the outer diameter of the splined end of shaft (13) to center the end of shaft (13) prior to its insertion by force in the bore (8).

3. Process according to claim 1 or 2, comprising the step of:
- forming at the end (13) of the shaft (2) a protruding centering portion (23) having a diameter inferior to the outer diameter (D) of the splined end (13);
- inserting the centering portion (23) of the shaft (2) in the bore (8) prior to inserting by force the end (13) of the shaft (2) in this bore (8).

4. Process according to claim 2, comprising the step of forming a circular recess (24) between the protruding centering portion (23) and the end (13) of the shaft (2) to improve evacuation of metal chips (15) resulting by the broaching process.

5. Process according to claim 1 to 4, wherein the end (13) of the shaft (2) comprises a circular recess (26) to form a second tooth at each spline (14).

6. Shaft to be used in a process according to any of claims 1 to 5, comprising a splined end (13) having teeth (10 ; 27, 28) arranged broach a corresponding bore.
